# EUROPÄISCHE PATENTSCHRIFT

(11) **EP 0 507 231 B1**
(45) Veröffentlichungstag und Bekanntmachung des Hinweises auf die Patenterteilung: **07.12.1994**
(21) Anmeldenummer: 92105428.4
(22) Anmeldetag: 30.03.1992
(51) Int. Cl.: B60J 10/04

(54) **Abdichtprofil**
Sealing profil
Joint d'étanchéité

(30) Priorität: 04.04.1991 DE 4110824
(43) Veröffentlichungstag der Anmeldung: 07.10.1992
(73) Patentinhaber: DRAFTEX INDUSTRIES LIMITED, Edinburgh, EH3 6YY, Scotland (GB)
(72) Erfinder: Vering, Heinz, W-5830 Schwelm (DE)
(74) Vertreter: Foster, David Martyn

(56) Entgegenhaltungen:
- FR-A- 2 290 558
- FR-A- 2 381 890

## Beschreibung

Die Erfindung bezieht sich auf ein Abdichtprofil für einen Durchtrittsschlitz eines Karosserieschachtes eines Kraftwagens für versenkbare Fensterscheiben, welches eine steife Halterungsflanke aufweist, die von einem U-förmigen Abschnitt einer Befestigungsklammer umgriffen und gehalten wird, die das Abdichtprofil am Karosserieschacht festlegt und das im Querschnitt eine an die Fensterscheibe anlegbare, gegen diese drückende obere Dichtlippe, eine vertieft darunter, unterhalb des oberen Schachtrandes liegende zweite untere Dichtlippe und eine Abdecklippe umfaßt, die am oberen Ende der oberen Dichtlippe angebunden ist und sich mit dem freien Ende von der oberen Dichtlippe weg bis über die Halterungsflanke erstreckt und in eine Nut eintaucht, die zwischen dem Kopfende der Halterungsflanke und einer separaten Abdeckleiste ausgebildet ist.

Bei einem herkömmlichen Abdichtprofil der gattungsgemäßen Art ist dasselbe im Bereich der oberen Dichtlippe als Hohlkammerprofil ausgebildet. Ein solches Abdichtungsprofil wird aus stilistischen, wie auch funktionellen Gründen abgelehnt. Das bekannte Abdichtprofil kann nämlich leicht Ausbeulen oder auch Einfallstellen bilden und erfordert beim Öffnen und Schließen der Fensterscheibe erhöhte Verschiebekräfte. Ein besonderer Nachteil des herkömmlichen Abdichtprofils ist darin zu sehen, daß das freie Ende der Abdecklippe leicht aus der Nut herausrutschen kann, wenn sich die Fensterscheibe in ihrer vollständig geöffneten Position befindet. Wegen der dann fehlenden Abstützung der oberen Dichtlippe durch die Fensterscheibe genügt schon ein leichter Druck von oben her auf die Dichtlippe um die Abdecklippe aus der Nut herausrutschen zu lassen, was natürlich im hohen Maße unerwünscht ist.

Der vorliegenden Erfindung liegt nun die Aufgabe zugrunde, ein Abdichtprofil der eingangs näher angegebenen Art in bezug auf stilistische und funktionelle Anforderungen hin zu verbessern und Vorsorge dafür zu treffen, daß das freie Abdecklippenende nicht ungewollt aus der Nut herausgleiten kann, wenn sich die Fensterscheibe in ihrer abgesenkten Position befindet.

Zur Lösung dieser Aufgabe ist erfindungsgemäß vorgesehen, daß sich zwischen dem oberen Ende der oberen Dichtlippe und dem oberen Ende der Halterungsflanke ein einstückig am Abdichtprofil angeformtes Zugband erstreckt, das im gestreckten Zustand im spitzen Winkel zur Abdecklippe ausgerichtet ist, um zu verhindern, daß das freie Ende der Abdecklippe aus der Nut herausrutscht, wenn die Fensterscheibe vollständig unter der oberen Dichtlippe abgesenkt ist.

Bei dem Zugband kann es sich um eine relativ dünne Materialhaut handeln, deren Dicke oder Steifheit so auszuwählen ist, daß durch dieselbe keine funktionellen Beeinträchtigungen des Abdichtprofils eintreten.

Das erfindungsgemäße Abdichtprofil kann noch dadurch optimiert werden, daß zwischen dem freien Endbereich der Abdecklippe und dem oberen Ende der Halterungsflanke ein zweites Band einstückig angeformt angeordnet ist, um ein Eindringen von Wasser oder auch Schmutzpartikeln in den Raum zwischen der Abdecklippe und dem Zugband auszuschließen.

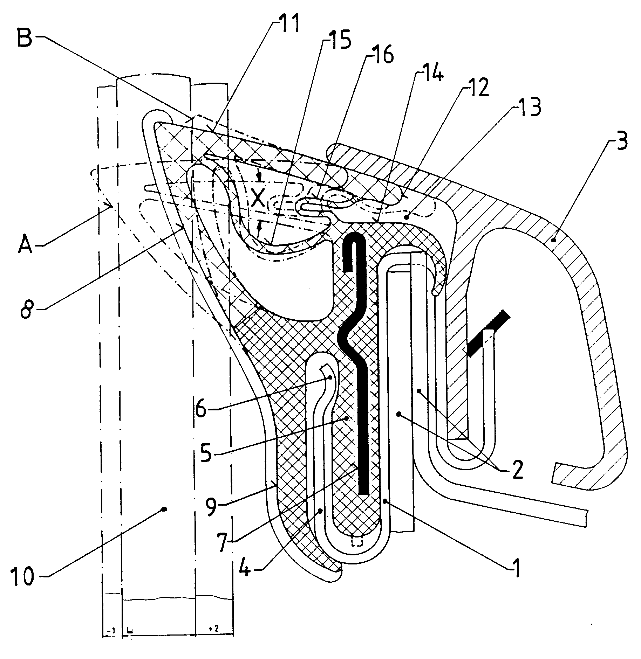

Ein Ausführungsbeispiel der Erfindung ist in der Zeichnung dargestellt.

Die Zeichnung zeigt ein Abdichtprofil in Form einer außenseitigen Fensterschachtabdichtung. Das Abdichtprofil ist durch eine Befestigungsklammer 1 an einer Wand 2 eines Karosserieschachtes befestigt. Die Befestigungsklammer 1 ist im Querschnitt 3-fach in entgegengesetzter Richtung U-förmig umgebogen und mit ihrem Mittelteil auf die Wand des Karosserieschachts aufgeklemmt. Sie nimmt in einem U-förmigen Endstück eine Abdeckleiste 3 auf, die eine Zierfunktion übernimmt. In ihrem gegenüberliegenden Endabschnitt umgreift die Befestigungsklammer 1 mit einem U-Schenkel 4 eine Halterungsflanke 5 des Abdichtprofils, greift mit einer am freien Ende des U-Schenkels 4 eingeprägten Nase 6 in eine Einkerbung der Halterungsflanke 5 ein und hält diese dadurch fest. Die Halterungsflanke 5 ist durch eine in sie eingelagerte metallische Einlage 7 versteift. Das gesamte Abdichtprofil ist als einstückiges Strangpreßprofil ausgebildet und kann bevorzugt aus elastomerem Material bestehen. Durch eine unterschiedliche Schraffur ist eine Hart/Weich-Kombination angedeutet, wobei sich die Einlage 7 im härteren Bereich befindet.

Das Abdichtprofil weist zwei entlang der Scheibenbahn übereinanderliegende Dichtlippen 8 und 9 auf, wovon die obere Dichtlippe 8 gegen die Scheibe 10 drückt und verhindert, daß beim Absenken der Scheibe 10 Wasser und Schmutz in den Karosserieschacht ungehindert transportiert werden, während die untere Dichtlippe 9 zum einen die Befestigungsklammer 1 gegen eingedrungenes Wasser abschirmt und darüber hinaus die unter die obere Dichtlippe 8 abgesenkte Scheibe 10 durch Anlage an diese am Klappern im Karosserieschacht hindert.

Am oberen Ende der oberen Dichtlippe 8 ist eine Abdecklippe 11 einstückig angebunden, die sich mit dem freien Ende 12 von der oberen Dichtlippe 8 weg bis über die Halterungsflanke 5 erstreckt und in eine Nut 13 eintaucht, die zwischen dem Kopfende 14 der Halterungsflanke 5 und der Abdeckleiste 3 ausgebildet ist. An der Dichtlippe 8 ist rückseitig am oberen Endbereich, und zwar im Übergangsbereich von dieser zur Abdecklippe 11 ein Zugband 15 mit einer Längskante angeformt, während die andere Längskante des Zugbandes 15 am Kopfende 14 der Halterungsflanke 5 angeformt ist. Durch das Zugband 15 wird verhindert, daß die Abdecklippe 11 aus der Nut 13 herausrutscht, wenn die Fensterscheibe 10 vollständig unter der oberen Dichtlippe 8 abgesenkt ist. Bei vollständig abgesenkter Scheibe 10 nimmt die obere Dichtlippe 8 die mit A gekennzeichnete und strichpunktiert angedeutete Position ein, in der sich das Zugband 15 geradlinig zwischen der oberen Dichtlippe 8 und dem Kopfende 14 der Halterungsflanke 5 erstreckt. Dadurch kann die Abdecklippe 11 nur durch ein gewolltes Überdehnen des Zugbandes aus der Nut 13 völlig herausgeführt werden. Im gestreckten Zustand des Zugbandes 15 bildet dieses mit der Abdecklippe 11 einen spitzen Winkel X. Bei dichtender Anlage der oberen Dichtlippe 8 an der Scheibe 10 nimmt das Zugband im Querschnitt eine Schleifenform an.

Die Funktion des Abdichtprofils könnte u.U. durch eindringendes Wasser oder durch eindringende Schmutzpartikel in die Nut 13 und von hier in den Raum zwischen der Abdecklippe 11 und dem Zugband 15 beeinflußt werden. Um dies zu vermeiden, ist zwischen dem freien Endbereich der Abdecklippe und dem oberen Ende 14 der Halterungsflanke 5 ein zweites relativ dünnes Band 16 einstückig angeformt angeordnet.

Die ausgezogenen Linien des Abdichtprofils lassen die Profilgrundstellung bei der Herstellung (Extrusion) erkennen, während die strichpunktierte Linie A die Stellung des Abdichtprofils bei völlig geöffneter und die strichpunktierte Linie B die Stellung des Abdichtprofils bei geschlossener Scheibe 10 zeigen.

## Patentansprüche

1. Abdichtprofil für einen Durchtrittsschlitz eines Karosserieschachtes eines Kraftwagens für versenkbare Fensterscheiben (10), welches eine steife Halterungsflanke (5) aufweist, die von einem U-förmigen Abschnitt einer Befestigungsklammer (1) umgriffen und gehalten wird, die das Abdichtprofil am Karosserieschacht festlegt und das im Querschnitt eine an die Fensterscheibe (10) anlegbare, gegen diese drückende obere Dichtlippe (8), eine vertieft darunter, unterhalb des oberen Schachtrandes liegende zweite untere Dichtlippe (9) und eine Abdecklippe (11) umfaßt, die am oberen Ende der oberen Dichtlippe (8) angebunden ist und sich mit dem freien Ende von der oberen Dichtlippe (8) weg bis über die Halterungsflanke (5) erstreckt und in eine Nut (13) eintaucht, die zwischen da Kopfende (14) der Halterungsflanke (5) und einer separaten Abdeckleiste (3) ausgebildet ist, dadurch gekennzeichnet, daß sich zwischen dem oberen Ende der oberen Dichtlippe (8) und da oberen Ende (14) der Halterungsflanke (5) ein einstückig am Abdichtprofil angeformtes Zugband (15) erstreckt, das im gestreckten Zustand im spitzen Winkel (X) zur Abdecklippe (11) ausgerichtet ist um zu verhindern, daß das freie Ende der Abdecklippe (11) aus der Nut (13) herausrutscht, wenn die Fensterscheibe (10) vollständig unter der oberen Dichtlippe (8) abgesenkt ist.

2. Abdichtprofil nach Anspruch 1, dadurch gekennzeichnet, daß zwischen dem freien Endbereich der Abdecklippe (11) und dem oberen Ende (14) der Halterungsflanke (5) ein zweites Band (16) einstückig angeformt angeordnet ist, um ein Eindringen von Wasser oder auch Schmutzpartikeln in den Raum zwischen der Abdecklippe (11) und dem Zugband (15) auszuschließen.

## Claims

1. Sealing profile for a pass-through slot of a motor vehicle body shaft for lowerable window panes (10), exhibiting a stiff holding flank (5) which is embraced and held by a U-shaped segment of a fastening clamp (1), which fastening clamp fixes the sealing profile to the body shaft, and comprising, in cross-section, an upper sealing lip (8) which can be applied to the window pane (10) and presses against it, a second, lower sealing lip (9), which lies in recessed arrangement thereunder, beneath the upper shaft edge, and a cover lip (11), which is bound to the upper end of the upper sealing lip (8) and extends, with the free end, away from the upper sealing lip (8) to over the holding flank (5) and dips into a groove (13) configured between the head end (14) of the holding flank (5) and a separate cover rail (3), characterized in that between the upper end of the upper sealing lip (8) and the upper end (14) of the holding flank (5) there extends a draw band (15), which is attached in one piece to the sealing profile and which, in the stretched state, is aligned at an acute angle (X) to the cover lip (11) so as to prevent the free end of the cover lip (11) from sliding out of the groove (13) whenever the window pane (10) is lowered fully below the upper sealing lip (8).

2. Sealing profile according to Claim 1, characterized in that between the free end region of the cover lip (11) and the upper end (14) of the holding flank (5) there is disposed, attached in one piece, a second band (16), so as to ensure that no water or dirt particles can penetrate into the space between the cover lip (11) and the draw band (15).

## Revendications

1. Profilé d'étanchéité pour une fente de passage d'un puits de carrosserie d'un véhicule pour des vitres à descendre (10), qui présente un flanc d'appui (5) rigide qui est saisi et maintenu par un tronçon en forme de U d'une pince de fixation (1), qui attache le profilé d'étanchéité au puits de carrosserie, et qui en section transversale comprend une lèvre d'étanchéité supérieure (8) applicable sur la vitre (10) et pressant contre celle-ci, une deuxième lèvre d'étanchéité inférieure (9) placée en profondeur sous celle-ci, en dessous du bord supérieur du puits et une lèvre de recouvrement (11), qui est reliée à l'extrémité supérieure de la lèvre d'étanchéité supérieure (8) et qui par son extrémité libre s'étend depuis la lèvre d'étanchéité supérieure (8) jusqu'au-delà du flanc d'appui (5) et plonge dans une rainure (13), qui est formée entre l'extrémité haute (14) du flanc d'appui (5) et une baguette de recouvrement séparée (3), caractérisé en ce qu'entre l'extrémité supérieure de la lèvre d'étanchéité supérieure (8) et l'extrémité supérieure (14) du flanc d'appui (5) s'étend une bande de traction (15) formée d'une pièce avec le profilé d'étanchéité, qui à l'état tendu est orientée à angle aigu (X) avec la lèvre de recouvrement (11), pour empêcher que l'extrémité libre de la lèvre de recouvrement (11) saute hors de la rainure (13), lorsque la vitre (10) est descendue entièrement sous la lèvre d'étanchéité supérieure (8).

2. Profilé d'étanchéité suivant la revendication 1, caractérisé en ce qu'entre la région de l'extrémité libre de la lèvre de recouvrement (11) et l'extrémité supérieure (14) du flanc d'appui (5) est disposée une seconde bande (16) formée d'une pièce pour exclure une pénétration d'eau ou aussi de particules de saletés dans l'espace entre la lèvre de recouvrement (11) et la bande de traction (15).
